# EUROPÄISCHE PATENTSCHRIFT

(11) **EP 2 152 385 B1**
(45) Veröffentlichungstag und Bekanntmachung des Hinweises auf die Patenterteilung: **26.01.2011**
(21) Anmeldenummer: 08750185.4
(22) Anmeldetag: 08.05.2008
(51) Int. Cl.: B01D 46/52, B01D 46/10, F02M 35/024

(54) **GAS-FILTEREINSATZ**
GAS FILTER INSERT
CARTOUCHE FILTRANTE À GAZ

(30) Priorität: 23.05.2007 DE 102007024287
(43) Veröffentlichungstag der Anmeldung: 17.02.2010
(73) Patentinhaber: MAHLE International GmbH, 70376 Stuttgart (DE)
(72) Erfinder: BERISHA, Bashkim, 71229 Leonberg (DE); STEGMÜLLER, Matthias, Ann Arbor, MI 48103 (US); STEHLIG, Jürgen, 72654 Neckartenzlingen (DE); WAIBEL, Hans, 71686 Remseck-Aldingen (DE)
(74) Vertreter: BRP Renaud & Partner
(86) Internationale Anmeldenummer: PCT/EP2008/055684
(87) Internationale Veröffentlichungsnummer: WO 2008/141945

(56) Entgegenhaltungen:
- DE-A1- 2 819 177
- GB-A- 2 162 087
- JP-A- 57 018 451

## Beschreibung

Die vorliegende Erfindung betrifft einen Gas-Filtereinsatz, insbesondere einen Luftfiltereinsatz für eine Frischluftanlage einer Brennkraftmaschine, mit den Merkmalen des Oberbegriffs des Anspruchs 1. Die Erfindung betrifft außerdem ein mit einem derartigen Filtereinsatz ausgestattetes Gas-Filter.

Aus der DE 103 28 002 A1 ist ein Gas-Filtereinsatz bekannt, der einen Filterkörper und einen Anschluss aufweist. Der Filterkörper erstreckt sich in seiner Längsrichtung U-förmig um einen Innenraum. Der Anschluss kommuniziert mit dem Innenraum und ist am Filterkörper an dessen offener Stirnseite angeordnet.

Beim bekannten Gas-Filtereinsatz ist der Filterkörper quer zu seiner Längsrichtung an seinen Endseiten dadurch abgedichtet, dass das den Filterkörper bildende, gefaltete Bahnenmaterial im Bereich dieser Endseiten entsprechend dicht ausgeführt ist, beispielsweise können die Endkanten verschweißt ein. Beim bekannten Gas-Filtereinsatz ist an den Endseiten des Filterkörpers an einem, den Innenraum begrenzenden Rand eine Dichtung angebracht, die im eingebauten Zustand mit einem Gehäuse zusammenwirkt, um im Gehäuse einen Rohraum von einem Reinraum zu trennen.

Aus der GB 2 162 087 A ist ein weiterer Gas-Filtereinsatz bekannt, bei dem der U-förmige Filterkörper quer zu seiner Längsrichtung an beiden Endseiten jeweils mit einer Endplatte abgedichtet ist, wobei die jeweilige Endplatte geschlossen ausgeführt ist, um den Innenraum an der jeweiligen Endseite des Filterkörpers zumindest im eingebauten Zustand zu verschließen. Beim bekannten Gas-Filtereinsatz sind die beiden Endplatten integral in einem einzigen Bauteil ausgeformt. Des Weiteren ist der bekannte Gas-Filtereinsatz mit einem Anschlussstutzen in einer Endwand ausgestattet, welche die offene Seite zwischen den U-Schenkeln des U-förmigen Filterkörpers begrenzt und welche integral mit den Endplatten ausgeführt ist. Die beiden Endplatten verschließen im Betrieb den vom Filterkörper umschlossenen Innenraum, weisen jedoch zur Montage jeweils eine verschließbare Bohrung in einem Hohlfuß auf, der in den Innenraum des Filterkörpers hineinragt und mit dem die Endplatten gegeneinander abgestützt sind. Das insoweit einstückig ausgestaltete Gehäuse des bekannten Gas-Filtereinsatzes besitzt eine vergleichsweise aufwändige Form und ist dementsprechend schwer herzustellen, wobei außerdem das Einbringen des Filterkörpers in dieses Gehäuse erschwert ist.

Aus der DE 28 19 177 A1 und aus der JP 57-018451 A sind weitere Gas-Filtereinsätze mit U-förmigen Filterkörper bekannt, bei denen separate Endplatten vorgesehen sind.

Die vorliegende Erfindung beschäftigt sich mit dem Problem, bei einem Gas-Filtereinsatz der eingangs genannten Art eine verbesserte oder zumindest eine andere Ausführungsform anzugeben, die sich insbesondere durch eine einfache und montagefreundliche Konstruktion auszeichnet, die eine ausreichende Stabilität gewährleistet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Abdichtung des Filterkörpers quer zu einer Längsrichtung zumindest an einer Endseite mittels einer Endplatte zu realisieren. Mit Hilfe einer derartigen Endplatte lässt sich das jeweilige, den Filterkörper bildende Filtermaterial an der betreffenden Endseite des Filterkörpers insgesamt abdichten, wodurch eine vergleichsweise aufwendig herzustellende Abdichtung des Filtermaterials selbst im Bereich der jeweiligen Endseite entbehrlich ist. Beispielsweise lassen sich alle Endkanten des Filtermaterials an der jeweiligen Endseite gemeinsam mit der jeweiligen Endplatte abdichten. Die Abdichtung des Filterkörpers an der jeweiligen Endseite kann mit Hilfe der verwendeten Endplatte beispielsweise dadurch realisiert werden, dass der Filterkörper an der betreffenden Endseite in die Endplatte einplastifiziert wird oder unter Verwendung eines geeigneten Klebstoffs mit der Endplatte verklebt wird oder mit der Endplatte verschweißt wird. Durch die Verwendung der wenigstens einen Endplatte kann außerdem die Stabilität des Filtereinsatzes verbessert werden, was insbesondere eine erhöhte Funktionssicherheit im Hinblick auf die Dichtigkeit im Einbauzustand mit sich bringen kann.

Der Filterkörper ist dabei an beiden Endseiten jeweils mit einer solchen Endplatte abgedichtet. Ferner ist die jeweilige Endplatte geschlossen ausgeführt, insbesondere so, dass sie den Innenraum von der jeweiligen Endseite des Filterkörpers zumindest im eingebauten Zustand verschließt. Bei dieser Bauweise kann auf eine zusätzliche am Filterkörper beziehungsweise an der jeweiligen Endplatte angebrachte Dichtung verzichtet werden. Insbesondere erfolgt die Trennung eines Reinraums von einem Rohraum so im Wesentlichen ausschließlich durch den Filtereinsatz, ohne dass ein Zusammenwirken mit dem Gehäuse des zugehörigen Gas-Filters im Einbauzustand erforderlich ist. Dies erhöht die Funktionssicherheit des Gas-Filters auch bei relativ großen Herstellungstoleranzen.

Der erfindungsgemäße Gas-Filtereinsatz charakterisiert sich zum Einen dadurch, dass die beiden Endplatten separate Bauteile sind, und zum Anderen dadurch, dass die jeweilige geschlossene Endplatte zumindest einen hohlen Fuß aufweist, der in den Innenraum hineinragt und über den sich die jeweilige Endplatte an der anderen Endplatte entweder indirekt über einen an der anderen Endplatte ausgebildeten entsprechenden Fuß oder direkt abstützt. Die Abstützung der beiden Endplatten aneinander über zumindest einen hohlen Fuß erhöht die Stabilität des Filterkörpers. Gleichzeitig vereinfachen die separaten Endplatten die Herstellung des Filterkörpers. Darüber hinaus zeichnet sich der erfindungsgemäße Gas-Filtereinsatz dadurch aus, dass der Anschluss an einer Stirnplatte ausgebildet ist, die bezüglich der Endplatten ein separates Bauteil ist oder zumindest mit einer der Endplatten über ein Filmscharnier verbunden ist. Die Verwendung einer derartigen Stirnplatte führt ebenfalls zu einem vereinfachten Aufbau des Filterkörpers. Die mehrteilige Ausgestaltung des Filterkörpers führt außerdem zu einer Vereinfachung der Montage des Gas-Filtereinsatzes.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: ein stark vereinfachter Längsschnitt eines Gas- Filtereinsatzes entsprechend Schnittlinien I in Fig. 2,
- Fig. 2: eine Schnittansicht des Gas-Filtereinsatzes ent- sprechend Schnittlinien II in Fig. 1,
- Fig.3: eine Ansicht des Gas-Filtereinsatzes entsprechend einer Blickrichtung III in den Figuren 1 und 2,
- Fig. 4-6: vergrößerte Detailansichten einer Endplatte des Gas-Filtereinsatzes bei verschiedenen Ausführungs- formen und/oder bei verschiedenen Abschnitten der Endplatte,
- Fig. 7+8: Schnittansichten wie in Fig. 2, jedoch nur im Be- reich eines Anschlusses, bei verschiedenen Ausfüh- rungsformen,
- Fig. 9: einen Längsschnitt wie in Fig. 1 eines Gas- Filters.

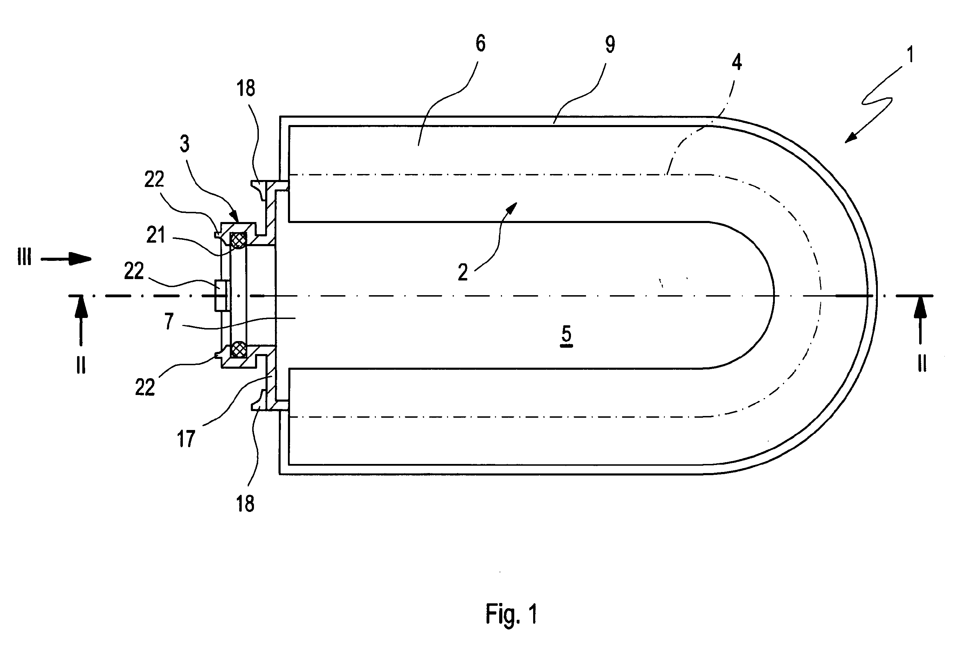

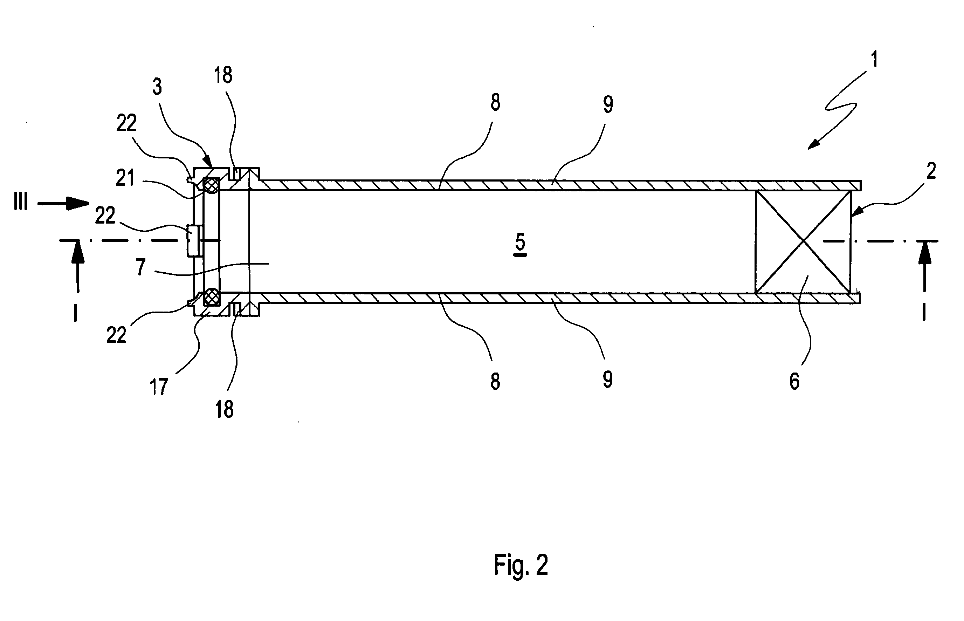

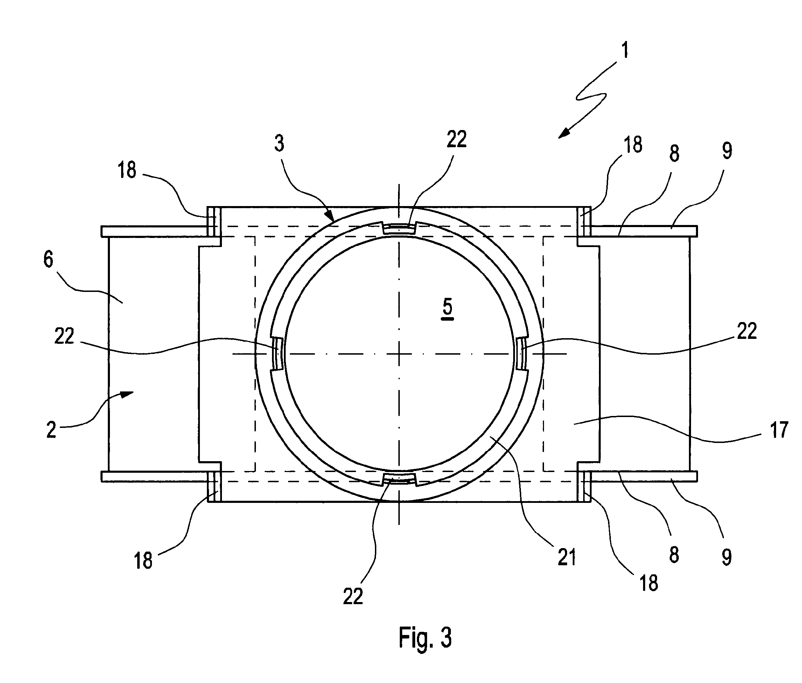

Entsprechend den Figuren 1 bis 9 umfasst ein Gas-Filtereinsatz 1 einen Filterkörper 2 und einen Anschluss 3. Der Filterkörper 2 erstreckt sich in seiner durch eine strichpunktierte Linie in Fig. 1 angedeuteten Längsrichtung 4 im Wesentlichen U-förmig um einen Innenraum 5. Der Filterkörper 2 besteht vorzugsweise aus einem geeigneten Filtermaterial 6, das insbesondere wellenförmig oder zick-zackförmig gefaltet oder plissiert sein kann. Durch seine U-Form weist der Filterkörper 2 eine offene Stirnseite 7 auf.

Der Anschluss 3 kommuniziert mit dem Innenraum 5 und ist am Filterkörper 2 an dessen offener Stirnseite 7 angeordnet.

Der Filterkörper 2 weist quer zu seiner Längsrichtung 4 jeweils eine Endseite 8 auf. Zumindest an einer dieser Endseiten 8 ist der Filterkörper 2 mit einer Endplatte 9 abgedichtet. Bei den hier gezeigten Ausführungsformen ist der Filterkörper 2 an beiden Endseiten 8 jeweils mit einer solchen Endplatte 9 abgedichtet. Grundsätzlich ist jedoch auch eine Ausführungsform denkbar, bei welcher der Filterkörper 2 nur im Bereich einer seiner Endseiten 8 mit einer derartigen Endplatte 9 abgedichtet ist.

Die Abdichtung der jeweiligen Endseite 8 des Filterkörpers 2 mit Hilfe der jeweiligen Endplatte 9 kann vorzugsweise dadurch realisiert werden, dass der Filterkörper 2 mit seiner Endseite 8 in die jeweilige Endplatte 9 einplastifiziert wird. Alternativ ist es ebenso möglich, den Filterkörper 2 an der jeweiligen Endseite 8 mit der jeweiligen Endplatte 9 zu verschweißen oder zu verkleben.

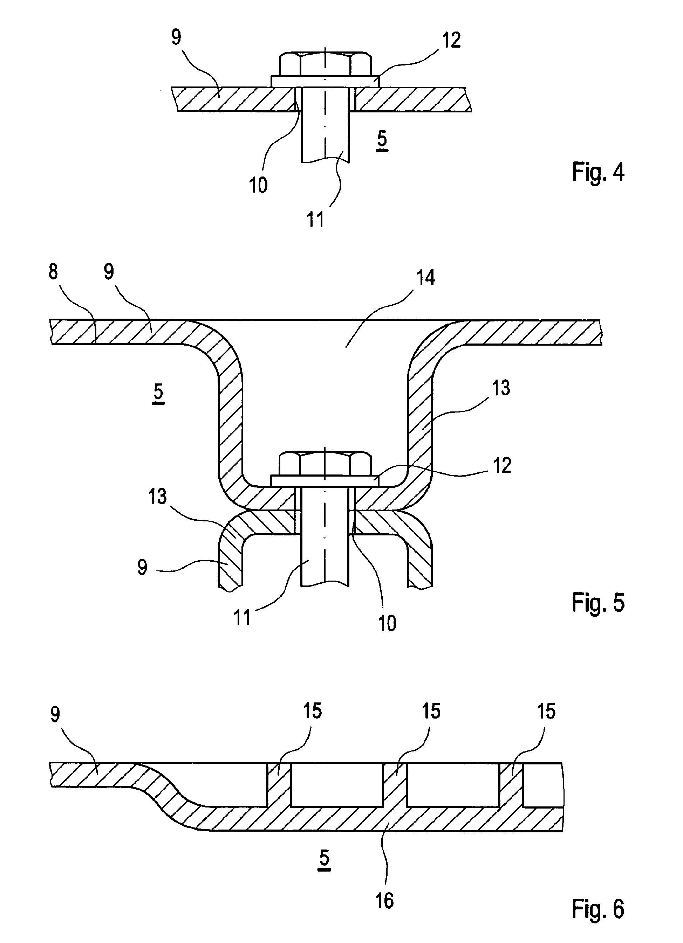

Bei den hier gezeigten, bevorzugten Ausführungsformen ist die jeweilige Endplatte 9 geschlossen ausgeführt. Hierdurch wird erreicht, dass der Innenraum 5 an der jeweiligen Endseite 8 des Filterkörpers 2 verschlossen ist, wodurch zusätzliche Dichtungsmaßnahmen entfallen können. Um in den Innenraum 5 zu gelangen oder um aus dem Innenraum 5 herauszukommen, muss das jeweilige Gas bei geschlossenen Endplatten 9 den Filterkörper 2 durchdringen. Dabei ist nicht ausgeschlossen, dass die jeweilige geschlossene Endplatte 9 entsprechend Fig. 4 zumindest eine Öffnung 10 enthalten kann. Diese ist jedoch im Einbauszustand des Gas-Filtereinsatzes 1 beispielsweise durch ein Befestigungselement 11 dicht verschlossen. Das Befestigungselement 11 ist hier durch eine Schraube gebildet, die sich über eine Dichtscheibe 12 an der Endplatte 9 abstützt und dadurch die Öffnung 10 dicht verschließt.

Zusätzlich weist die jeweilige geschlossene Endplatte 9 gemäß Fig. 5 zumindest einen hohlen Fuß 13 auf. Dieser hohle Fuß 13 ragt in den Innenraum 5 hinein und ist im Bereich der jeweiligen Endseite 8 des Filterkörpers 2 offen. Die entsprechende offene Seite ist in Fig. 5 mit "14" bezeichnet. Der Fuß 13 kann beispielsweise dazu verwendet werden, die eine Endplatte 9 an einem Gehäuse oder an der anderen Endplatte 9 abzustützen, entweder direkt oder, wie in Fig. 5 angedeutet, über einen entsprechenden Fuß 13 der anderen Endplatte 9. Ebenso lässt sich der Fuß 13 dazu nutzen, den Gas-Filtereinsatz 1 im Einbauszustand mittels eines entsprechenden Befestigungselements 11 durch eine Öffnung 10 hindurch zu fixieren. Durch den abgestützten Fuß 13 kann die Stabilität des Gas-Filtereinsatzes 1 erheblich verbessert werden.

Zwar ist die jeweilige Endplatte 9 durch eine derartige Öffnung 10 beziehungsweise durch einen derartigen Fuß 13, der ebenfalls eine solche Öffnung 10 enthalten kann, im unverbauten Zustand nicht vollständig geschlossen, jedoch kann sie den Innenraum 5 zumindest im Einbauszustand hinreichend gasdicht verschließen, da die jeweilige Öffnung 10 im Einbauszustand zum Beispiel durch ein entsprechendes Befestigungselement 11 dicht verschlossen ist.

Die Stabilität der jeweiligen Endplatte 9 lässt sich gemäß Fig. 6 auch durch das Ausbilden von Rippen 15 erhöhen. Diese können vorzugsweise in einem in Richtung des Innenraums 5 zurückversetzten Abschnitt 16 der jeweiligen Endplatte 9 ausgebildet sein und mit der übrigen Außenseite der Endplatte 9 im Wesentlichen bündig abschließen.

Zumindest entsprechend den Figuren 1 bis 3 ist der Anschluss 3 bei dieser bevorzugten Ausführungsform an einer Stirnplatte 17 ausgebildet. Diese Stirnplatte 17 ist dann an der offenen Stirnseite 7 des Filterkörpers 2 angeordnet. Die Stirnplatte 17 kann am Filterkörper 2 an der jeweiligen Endplatte 9 befestigt sein. Die Stirnplatte 17 ist dazu an stirnseitigen Enden der U-Schenkel des Filterkörpers 2 mit diesem beziehungsweise mit dem Filtermaterial des Filterkörpers 2 verbunden. Beispielsweise kann die Stirnplatte 17 mit dem Filterkörper 2 und den Endplatten 9 stirnseitig verklebt sein. Ebenso ist es grundsätzlich möglich, die Stirnplatte 17 der jeweiligen Endplatte 9 und/oder mit dem Filterkörper 2 zu verschweißen oder durch Plastifizieren zu verbinden.

Bevorzugt ist dabei der Anschluss 3 mit der zugehörigen Stirnplatte 17 integral aus einem Stück hergestellt, zum Beispiel als Spritzgussteil.

Die Stirnplatte 17 kann entsprechend der in den Figuren 1 bis 3 gezeigten Ausführungsform mit der jeweiligen Endplatte 9 verclipst sein. Entsprechende, an der Endplatte 9 ausgebildete Clips sind hier mit "18" bezeichnet. Bemerkenswert ist hierbei eine besondere Ausführungsform, bei welcher die Stirnplatte 17 sowohl mit der jeweiligen Endplatte 9 verclipst ist als auch mit der jeweiligen Endplatte 9 und mit dem Filterkörper 2 verklebt ist. Diese Ausführungsform zeichnet sich durch eine vereinfachte Herstellbarkeit aus. Während des Aushärtvorgangs des Klebstoffs ermöglicht die Verclipsung eine hinreichende Lagefixierung und Anpressung der Stirnplatte 17 an der jeweiligen Endplatte 9 und am Filterkörper 2. Nach dem Aushärten der Verklebung ist die Verclipsung an sich nicht mehr erforderlich.

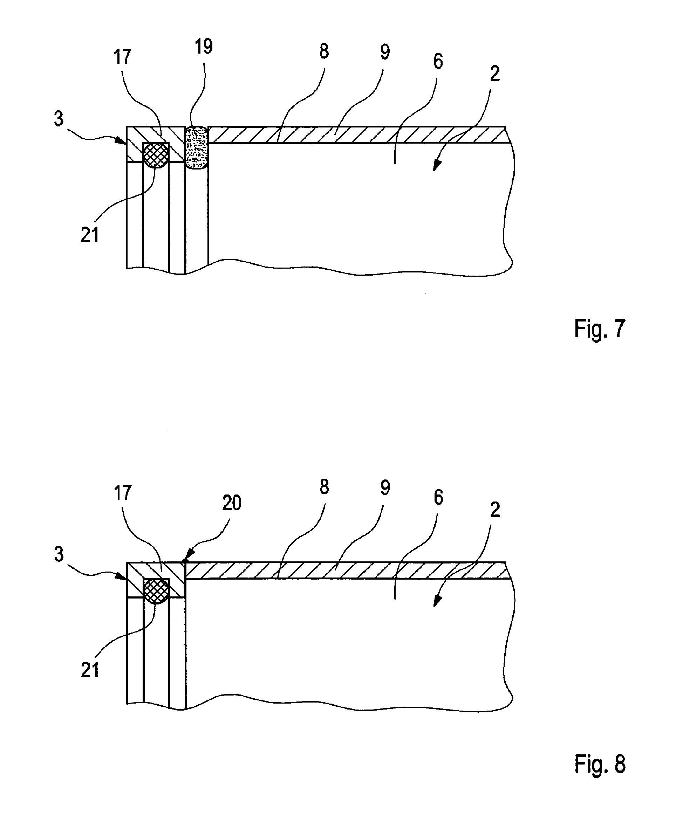

Fig. 7 zeigt eine Ausführungsform, bei welcher der Anschluss 3 beziehungsweise die gegebenenfalls vorhandene Stirnplatte 17 an den Filterkörper 2 und an die jeweilige Endplatte 9 stirnseitig angeschäumt ist. Ein entsprechender Schaum ist in Fig. 7 mit "19" bezeichnet. Ein hierfür geeigneter Schaum 19 kann beispielsweise geschlossene Poren aufweisen und zum Beispiel aus Polyurethan bestehen.

Fig. 8 zeigt eine Ausführungsform, bei welcher die Stirnplatte 17 und wenigstens eine der Endplatten 9 integral aus einem Stück hergestellt sind. Beispielsweise lassen sich die jeweilige Endplatte 9 und die Stirnplatte 17 in einer Spritzgussform als ein gemeinsames Bauteil spritzgießen. Dabei können die Stirnplatte 17 und die jeweilige Endplatte 9 insbesondere über ein Filmscharnier 20 miteinander verbunden sein. Hierdurch kann der Spritzgussvorgang beziehungsweise das hierzu erforderliche Werkzeug vereinfacht werden. Die einteilige Ausführung kann Montagevorteile bieten.

Der Anschluss 3 ist hier so ausgestaltet, dass er eine Radialdichtung 21, insbesondere ein O-Ring haltern kann. Hierzu sind beispielsweise entsprechende Haken 22 ausgebildet, die in Umfangsrichtung verteilt angeordnet sind und die jeweilige Radialdichtung 21 segmentweise radial übergreifen, um diese in ihrer Lage zu positionieren.

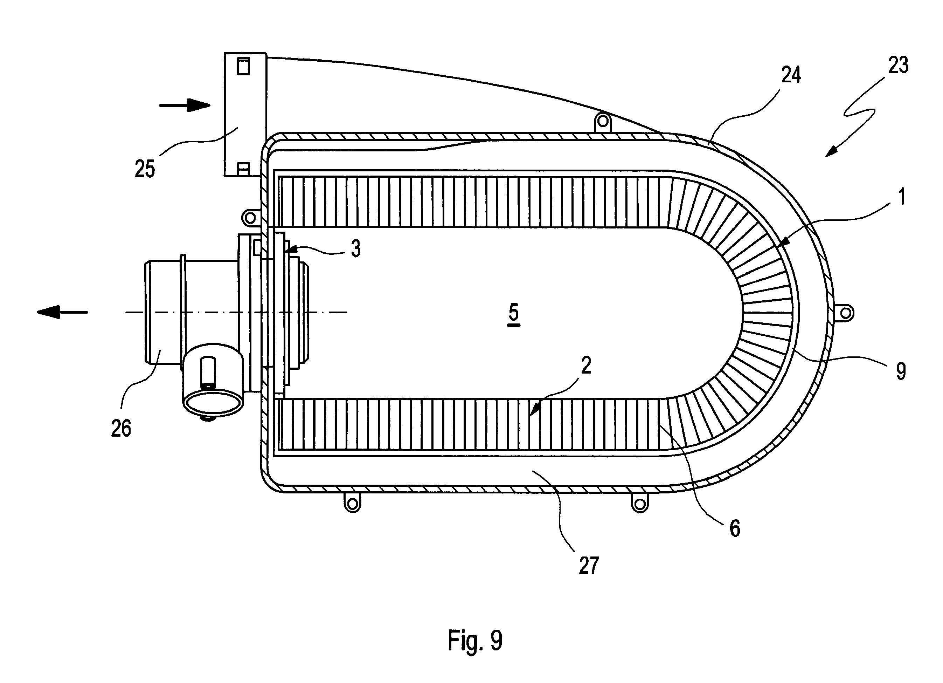

Entsprechend Fig. 9 umfasst ein Gas-Filter 23 ein Gehäuse 24 und einen Gas-Filtereinsatz 1 der zuvor beschriebenen Art. Das Gehäuse 24 weist einen rohseitigen Einlass 25 und einen reinseitigen Auslass 26 auf. Der Gas-Filtereinsatz 1 ist im montierten Zustand in das Gehäuse 24 eingesetzt und trennt dadurch einen Rohraum von einem Reinraum. Im gezeigten Beispiel ist der Anschluss 3 des Gas-Filtereinsatzes 1 mit dem Auslass 26 verbunden. Dementsprechend bildet ein Innenraum 27 des Gehäuses 24 den Rohraum, während der Innenraum 5 des Filtereinsatzes 1 den Reinraum bildet. Es ist klar, dass grundsätzlich auch eine umgekehrte Strömungsrichtung vorliegen kann.

Das Gas-Filter 23 beziehungsweise der Gas-Filtereinsatz 1 sind bevorzugt als Luftfilter beziehungsweise Luft-Filtereinsatz ausgestaltet und finden zum Beispiel Verwendung in einer Frischluftanlage einer Brennkraftmaschine, die insbesondere in einem Kraftfahrzeug angeordnet sein kann.

## Patentansprüche

1. Gas-Filtereinsatz, insbesondere Luft-Filtereinsatz für eine Frischluftanlage einer Brennkraftmaschine,
- mit einem Filterkörper (2), der sich in seiner Längsrichtung (4) U-förmig um einen Innenraum (5) erstreckt,
- mit einem Anschluss (3), der mit dem Innenraum (5) kommuniziert und der am Filterkörper (2) an dessen offener Stirnseite (7) angeordnet ist,
- wobei der Filterkörper (2) an beiden Endseiten (8) jeweils mit einer Endplatte (9) abgedichtet ist,
- wobei die jeweilige Endplatte (9) geschlossen ausgeführt ist, um den Innenraum (5) an der jeweiligen Endseite (8) des Filterkörpers (2) zumindest im eingebauten Zustand zu verschließen,
**dadurch gekennzeichnet,**
- **dass** die beiden Endplatten (9) separate Bauteile sind,
- **dass** die jeweilige geschlossene Endplatte (9) zumindest einen hohlen Fuß (13) aufweist, der in den Innenraum (5) hineinragt und über den sich die jeweilige Endplatte (9) an der anderen Endplatte (9) entweder indirekt über einen an der anderen Endplatte (9) ausgebildeten entsprechenden Fuß (13) oder direkt abstützt,
- **dass** der Anschluss (3) an einer Stirnplatte (17) ausgebildet ist, die bezüglich der Endplatten (9) ein separates Bauteil ist oder zumindest mit einer der Endplatten (9) über ein Filmscharnier (20) verbunden ist.

2. Gas-Filtereinsatz nach Anspruch 1,
**dadurch gekennzeichnet,**
**dass** die jeweilige geschlossene Endplatte (9) zumindest eine Öffnung (10) enthält, die im eingebauten Zustand durch ein Befestigungselement (11) dicht verschlossen ist.

3. Gas-Filtereinsatz nach Anspruch 1 oder 2,
**dadurch gekennzeichnet,**
**dass** der jeweilige Fuß (13) im Bereich der jeweiligen Endseite (8) des Filterkörpers (2) offen ist.

4. Gas-Filtereinsatz nach einem der Ansprüche 1 bis 3,
**dadurch gekennzeichnet,**
**dass** der Filterkörper (2) mit seiner jeweiligen Endseite (8) in die jeweilige Endplatte (9) einplastifiziert ist oder an die jeweilige Endplatte (9) angeschweißt oder angeklebt ist.

5. Gas-Filtereinsatz nach einem der Ansprüche 1 bis 4,
**dadurch gekennzeichnet,**
**dass** die Stirnplatte (17) mit der jeweiligen Endplatte (9) verclipst ist.

6. Gas-Filtereinsatz nach einem der Ansprüche 1 bis 5,
**dadurch gekennzeichnet,**
**dass** die Stirnplatte (17) mit der jeweiligen Endplatte (9) und mit dem Filterkörper (2) verklebt ist.

7. Gas-Filtereinsatz nach einem der Ansprüche 1 bis 6,
**dadurch gekennzeichnet,**
**dass** der Anschluss (3) und/oder die Stirnplatte (17) an den Filterkörper (2) und an die jeweilige Endplatte (9) angeschäumt ist.

8. Gas-Filter, insbesondere Luft-Filter für eine Frischluftanlage einer Brennkraftmaschine,
- mit einem Gehäuse (24), das einen rohseitigen Einlass (25) und einen, reinseitigen Auslass (26) aufweist,
- mit einem Gas-Filtereinsatz (1) nach wenigstens einem der Ansprüche 1 bis 7, der in das Gehäuse (24) eingesetzt ist und dessen Anschluss (3) mit dem Auslass (26) oder mit den Einlass (25) verbunden ist.

## Claims

1. A gas filter insert, in particular an air filter insert for a fresh air system of an internal combustion engine,
- having a filter member (2) that extends in its longitudinal direction (4) in a "U"-shape about an interior chamber (5),
- having a connection (3) that communicates with the interior chamber (5) and that is arranged on the filter member (2) on its open front side (7),
- wherein the filter member (2) is sealed on both end sides (8) respectively with an end plate (9),
- wherein the respective end plate (9) is configured as closed in order to close the interior chamber (5) on the respective end side (8) of the filter member (2) at least in the assembled state,
**characterised in**
- **that** both of the end plates (9) are separate components,
- **that** the respective, closed end plate (9) has at least one hollow foot (13) that protrudes into the interior chamber (5) and by means of which the respective end plate (9) is supported on the other end plate (9) either directly or indirectly by means of a corresponding foot (13) configured on the other end plate (9),
- the connection (3) is configured on a front plate (17) that is a separate component with respect to the end plates (9) or is at least connected to one of the end plates (9) by means of an integral hinge (20).

2. The gas filter insert as specified in claim 1,
**characterised in that**
the respective, closed end plate (9) contains at least one opening (10) that is tightly sealed in the assembled state by a fastening element (11).

3. The gas filter insert as specified in claim 1 or claim 2,
**characterised in that**
the respective foot (13) is open in the region of the respective end side (8) of the filter member (2).

4. The gas filter insert as specified in any one of the claims 1 to 3,
**characterised in that**
the filter member (2) is encased in plastic with its respective end side (8) in the respective end plate (9) or is welded or adhered onto the respective end plate (9).

5. The gas filter insert as specified in any one of the claims 1 to 4,
**characterised in that**
the front plate (17) is clipped to the respective end plate (9).

6. The gas filter insert as specified in any one of the claims 1 to 5,
**characterised in that**
the front plate (17) is adhered to the respective end plate (9) as well as to the filter member (2).

7. The gas filter insert as specified in any one of the claims 1 to 6,
**characterised in that**
the connection (3) and/or the front plate (17) is foamed onto the filter member (2) as well as onto the respective end plate (9).

8. A gas filter, in particular an air filter for a fresh air system of an internal combustion engine,
- having a housing (24) that has an inlet (25) on the crude side and an outlet (26) on the pure side,
- furthermore having a gas filter insert (1) according to at least one of the claims 1 to 7, said gas filter insert being inserted into the housing (24) and its connection (3) being connected to the outlet (26) or to the inlet (25).

## Revendications

1. Elément de filtre à gaz, en particulier élément de filtre à air pour une installation d'air frais d'un moteur à combustion interne, comprenant
- un corps de filtre (2), qui s'étend dans sa direction longitudinale (4) en forme de U autour d'un espace intérieur (5),
- un branchement (3), qui communique avec l'espace intérieur (5) et est disposé sur le corps de filtre (2) sur son côté avant (7) ouvert,
- le corps de filtre (2) étant étanchéifié avec une plaque d'extrémité (9) sur chacun des deux côtés d'extrémité (8),
- la plaque d'extrémité (9) concernée étant conçue fermée, afin d'obturer l'espace intérieur (5) sur le côté d'extrémité (8) concerné du corps de filtre (2) au moins dans l'état monté,
**caractérisé**
- **en ce que** les deux plaques d'extrémité (9) sont des composants séparés,
- **en ce que** la plaque d'extrémité (9) fermée concernée présente au moins une base (13) creuse, qui dépasse à l'intérieur de l'espace intérieur (5) et par laquelle la plaque d'extrémité (9) concernée s'appuie sur l'autre plaque d'extrémité (9) soit indirectement au moyen d'une base (13) appropriée et réalisée sur l'autre plaque d'extrémité (9) soit directement,
- **en ce que** le branchement (3) est conçu sur une plaque frontale (17), qui est un composant séparé par rapport aux plaques d'extrémité (9) ou est reliée au moins à l'une des plaques d'extrémité (9) au moyen d'une charnière en film (20).

2. Elément de filtre à gaz selon la revendication 1,
**caractérisé en ce que**
la plaque d'extrémité (9) fermée concernée contient au moins une ouverture (10), qui est fermée de façon étanche dans l'état monté par un élément de fixation (11).

3. Elément de filtre à gaz selon la revendication 1 ou 2,
**caractérisé en ce que**
la base (13) concernée est ouverte dans la zone du côté d'extrémité (8) concerné du corps de filtre (2).

4. Elément de filtre à gaz selon l'une quelconque des revendications 1 à 3,
**caractérisé en ce que**
le corps de filtre (2) est plastifié avec son côté d'extrémité (8) concerné à l'intérieur de la plaque d'extrémité (9) concernée ou est soudé ou collé sur la plaque d'extrémité (9) concernée.

5. Elément de filtre à gaz selon l'une quelconque des revendications 1 à 4,
**caractérisé en ce que**
la plaque frontale (17) est clipsée avec la plaque d'extrémité (9) concernée.

6. Elément de filtre à gaz selon l'une quelconque des revendications 1 à 5,
**caractérisé en ce que**
la plaque frontale (17) est collée avec la plaque d'extrémité (9) concernée et avec le corps de filtre (2).

7. Elément de filtre à gaz selon l'une quelconque des revendications 1 à 6,
**caractérisé en ce que**
le raccordement (3) et/ou la plaque frontale (17) est/sont montés par moussage sur le corps de filtre (2) et sur la plaque d'extrémité (9) concernée.

8. Elément de filtre à gaz, en particulier filtre à air pour l'installation d'air frais d'un moteur à combustion interne, comprenant
- un boîtier (24), qui présente une entrée (25) côté brut et une sortie (26) côté pur,
- un élément de filtre à gaz (1) selon au moins l'une quelconque des revendications 1 à 7, qui est inséré dans le boîtier (24) et dont le branchement (3) est relié à la sortie (26) ou à l'entrée (25).
